# FASCICULE DE BREVET EUROPEEN

(11) **EP 4 031 312 B1**
(45) Date de publication et mention de la délivrance du brevet: **09.10.2024**
(21) Numéro de dépôt: 20804617.7
(22) Date de dépôt: 20.10.2020
(51) Int. Cl.: B22F 5/00, B33Y 40/20, B22F 3/105, B22F 3/24, B22F 10/28, B33Y 80/00, F01D 5/28, B22F 10/64, F01D 25/28, B29C 64/40, B29C 64/153, B22F 5/04, B23P 6/00

(54) **PROCEDE DE MAINTIEN D'UNE EBAUCHE DE PIECE, PAR DILATATION DE FLUIDE DANS UNE PARTIE DE MAINTIEN FABRIQUEE ADDITIVEMENT**
VERFAHREN ZUM HALTEN EINES TEILROHLINGS DURCH FLÜSSIGKEITSAUSDEHNUNG IN EINEM GENERATIV GEFERTIGTEN HALTEABSCHNITT
METHOD FOR HOLDING A PART BLANK BY FLUID EXPANSION IN AN ADDITIVELY MANUFACTURED HOLDING PORTION

(30) Priorité: 30.10.2019 FR 1912228
(43) Date de publication de la demande: 27.07.2022
(73) Titulaire: SAFRAN AIRCRAFT ENGINES, 75015 Paris (FR)
(72) Inventeur: COMBES, Guilhem, Kevin, 77550 Moissy-Cramayel (FR); DREANO, Sébastien, Vincent, François, 77550 Moissy-Cramayel (FR); METGE, Pierre, Jean-Baptiste, 77550 Moissy-Cramayel (FR)
(74) Mandataire: Brevalex
(86) Numéro de dépôt international: PCT/FR2020/051887
(87) Numéro de publication internationale: WO 2021/084187

(56) Documents cités:
- EP-A1- 3 511 093
- FR-A1- 2 962 061

## Description

### DOMAINE TECHNIQUE

L'invention se rapporte au domaine technique de la fabrication additive sur lit de poudre, également dénommée impression 3D. Elle concerne plus spécifiquement un procédé de maintien d'une ébauche de pièce, l'ébauche de pièce et l'ensemble de maintien étant fabriqués au moins partiellement additivement par un dépôt de poudre couche par couche, en partie solidifié par fusion sélective ou frittage sélectif par un faisceau laser ou par un faisceau d'électrons.

### ÉTAT DE LA TECHNIQUE ANTÉRIEURE

Les procédés de fusion sélective ou de frittage sélectif sur lit de poudre permettent de réaliser facilement des pièces métalliques ou céramiques telles que des pièces de turbomachine qui sont soumises à des contraintes mécaniques et/ou thermiques importantes.

De tels procédés sont notamment connus sous les acronymes SLM (de l'anglais « Selective Laser Melting »), SLS (de l'anglais « Selective Laser Sintering »), DMLS (de l'anglais « Direct Metal Laser Sintering ») et EBM (de l'anglais « Electron Beam Melting »).

Ces procédés comprennent généralement une étape de dépôt, à l'aide d'un moyen d'étalement de type rouleau ou racleur, d'une première couche de poudre dans un bac de fabrication dont le fond est formé par un plateau mobile en translation, suivie d'une étape de chauffage par un faisceau laser ou par un faisceau d'électrons d'une zone prédéfinie de la couche de poudre. L'énergie apportée par ce faisceau provoque la fusion locale ou le frittage local de la poudre qui, en se solidifiant, forme une première couche de la pièce.

Le plateau est ensuite descendu d'une distance correspondant à l'épaisseur d'une couche, puis une seconde couche de poudre est amenée par le moyen d'étalement sur la couche précédente. Par la suite, une seconde couche de la pièce est formée à l'aide du faisceau. Ces étapes sont répétées jusqu'à la fabrication complète de l'ébauche de pièce.

La poudre non fusionnée ou non frittée est ensuite éliminée. Puis, l'ébauche de pièce est maintenue pendant un chauffage de l'ébauche de pièce pour limiter les contraintes thermiques et/ou mécaniques dans l'ébauche de pièce. Ce chauffage peut aussi viser à augmenter la solidité et/ou la durée de vie de l'ébauche de pièce.

Le maintien de l'ébauche de pièce lors de l'élimination de la poudre peut poser des difficultés. Par ailleurs, le chauffage de l'ébauche de pièce et le maintien de l'ébauche de pièce lors du chauffage peuvent générer des contraintes mécaniques indésirables sur l'ébauche de pièce. De telles contraintes mécaniques peuvent s'avérer particulièrement gênantes lorsque l'ébauche de pièce présente une résistance mécanique relativement faible, par exemple lorsque la pièce est une pale ou plus généralement qu'elle comprend au moins une paroi fine.

Par exemple, un procédé de fabrication d'une pale de turbomachine par fusion sélective d'une poudre est décrit FR2962061 A1, ledit procédé comprenant les étapes suivantes:
- former couche par couche sur un plateau et en même temps que la pale, au moins un élément de maintien et de support de la pale, cet élément étant écarté et distinct de la pale et séparé de celle-ci par un intervalle rempli de poudre non fondue.

### EXPOSÉ DE L'INVENTION

L'invention vise à résoudre au moins partiellement les problèmes rencontrés dans les solutions de l'art antérieur.

A cet égard, l'invention a pour objet un procédé de maintien d'une ébauche de pièce à l'intérieur d'un ensemble de maintien selon la revendication 1.

L'ensemble de maintien comprend une première partie de maintien, l'ébauche de pièce et au moins partiellement la première partie de maintien étant fabriquées par fabrication additive. La première partie de maintien comporte une cavité interne contenant un fluide.

Selon l'invention, le procédé de maintien comprend un chauffage de l'ensemble de maintien et de l'ébauche de pièce pour déformer la première partie de maintien par dilatation de fluide dans la cavité interne et pour réduire un espace entre l'ébauche de pièce et l'ensemble de maintien par dilation de la première partie de maintien relativement à l'ébauche de pièce.

Grâce au procédé de maintien selon l'invention, l'ébauche de pièce est maintenue davantage et/ou plus facilement, tout en limitant les contraintes mécaniques exercées sur l'ébauche de pièce.

L'invention va à l'encontre du principe général qui est d'éviter de réaliser des cavités internes fermées lors de la fabrication additive d'une pièce. Ce principe général vise notamment à mieux prévoir et contrôler la forme, la structure et la résistance mécanique de la pièce. Il permet notamment de réduire le risque d'une présence indésirable de matériau poudreux non fusionné ou non fritté dans la cavité.

L'invention n'est pas limitée par cette contrainte, en réalisant la cavité interne dans la première partie de maintien qui est déformable et qui est distincte de la pièce à fabriquer.

L'élimination de poudre non fusionnée ou non frittée est notamment facilitée par l'espace relativement important entre l'ensemble de maintien et l'ébauche de pièce, suite à la fusion ou à au frittage de la poudre et avant chauffage de l'ensemble de maintien et de l'ébauche de pièce.

Selon l'invention, la cavité interne est fermée hermétiquement au fluide, le fluide étant de préférence un gaz.

L'invention peut comporter de manière facultative une ou plusieurs des caractéristiques suivantes combinées entre elles ou non.

Selon une autre particularité de réalisation, la première partie de maintien comprend une paroi externe qui délimite la cavité interne et qui présente une épaisseur comprise entre 0,3 mm et 1 mm, de préférence 0,6 mm.

La paroi externe présente une épaisseur suffisante pour être fabriquée par fabrication additive, tout en présentant une épaisseur suffisamment faible pour permettre une déformation de la première partie de maintien par dilatation du fluide dans la cavité interne. La paroi externe est notamment étanche au fluide de la cavité interne.

Selon une autre particularité de réalisation, la cavité interne est configurée pour s'allonger entre 60% et 100% selon une direction d'élongation maximale de la cavité interne, de préférence de 80%.

Le volume de la cavité interne est suffisamment important pour permettre la dilatation d'une grande quantité de fluide et la déformation de la première partie de maintien par dilatation du fluide.

Selon une particularité de réalisation, l'ensemble de maintien comprend la première partie de maintien et une deuxième partie de maintien entre lesquelles est située l'ébauche de pièce.

Selon une particularité de réalisation, la première partie de maintien et la deuxième partie de maintien comprennent chacune une coquille. Chaque coquille comporte une paroi externe et une cavité interne contenant du fluide.

Chaque partie de maintien est alors notamment configurée pour réduire un espace entre l'ébauche de pièce et cette partie de maintien du fait d'une déformation de cette partie de maintien par dilatation de fluide dans la cavité interne de cette partie de maintien.

En variante, la deuxième partie de maintien est dépourvue de cavité interne, en étant par exemple formée par une coquille pleine ou une coquille rigide. Dans ce cas, la deuxième coquille pleine est notamment indéformable lorsque la première partie de maintien est déformée par dilatation du fluide à l'intérieur de sa cavité interne.

De préférence, chaque partie de maintien est configurée pour réduire un espace entre l'ébauche de pièce et l'ensemble de maintien lors d'une déformation de cette partie de maintien par dilation de cette partie de maintien relativement à l'ébauche de pièce lors du chauffage de l'ensemble de maintien et de l'ébauche de pièce, de sorte à maintenir l'ébauche de pièce dans l'ensemble de maintien.

L'invention porte également sur un procédé de fabrication d'une pièce pour turbomachine selon la revendication 4, mettant en oeuvre un procédé de maintien tel que défini ci-dessus. Le procédé de fabrication comprend la fabrication de l'ébauche de pièce et au moins partiellement de la première partie de maintien par fabrication additive.

Le procédé de fabrication additive est notamment un procédé de fusion sélective ou de frittage sélectif sur lit de poudre. De préférence, la première partie de maintien est entièrement réalisée par fabrication additive.

Selon une particularité de réalisation, l'ébauche de pièce, la première partie de maintien et la deuxième partie de maintien sont fabriquées par fabrication additive, de préférence dans un même matériau. Ce matériau est notamment un matériau métallique. En particulier, la première partie de maintien et la deuxième partie de maintien ont chacune une densité inférieure à la densité de l'ébauche de pièce.

Selon une particularité de réalisation, le chauffage de l'ensemble de maintien et de l'ébauche de pièce a lieu lors d'un traitement thermique de détentionnement de l'ébauche de pièce pour limiter les contraintes thermiques et/ou mécaniques de l'ébauche de pièce.

Selon une particularité de réalisation, le procédé de fabrication comprend une séparation de l'ébauche de pièce de l'ensemble de maintien après le chauffage de l'ensemble de maintien et de l'ébauche de pièce.

De préférence, le procédé de fabrication comprend une séparation de l'ébauche de pièce d'une embase pour l'ébauche de pièce et pour l'ensemble de maintien, après le chauffage de l'ensemble de maintien et de l'ébauche de pièce.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une représentation schématique partielle d'un outillage de fabrication additive qui est utilisé lors de la mise en oeuvre d'un procédé de fabrication additive selon un premier mode de réalisation de l'invention ;
- la figure 2 illustre le procédé de fabrication de la pièce après fusion ou frittage du matériau poudreux et avant maintien étroit de l'ébauche de pièce ;
- la figure 3 illustre le procédé de fabrication de la pièce lors d'un maintien étroit de l'ébauche de pièce ;
- la figure 4 illustre la pièce après usinage de l'ébauche de pièce et après séparation de l'ébauche de pièce de l'ensemble de maintien et de l'outillage.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

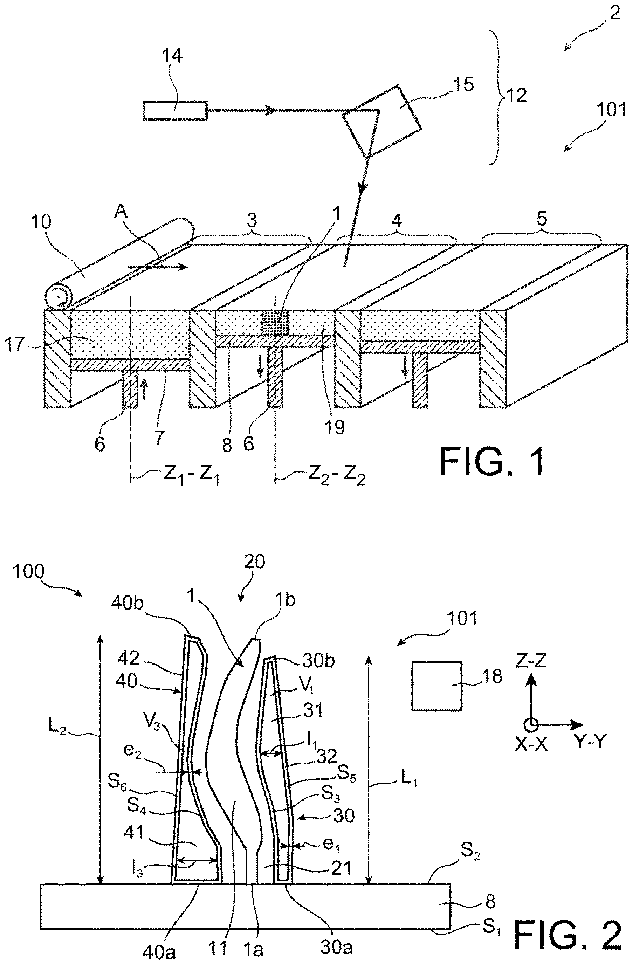

La figure 1 représente un exemple d'outillage 2 pour la fabrication d'une pièce 1 par fusion sélective ou frittage sélectif sur lit de poudre selon un procédé de fabrication selon un premier mode de réalisation.

La pièce 1 est une pièce pour turbomachine d'aéronef, par exemple une pale, une paroi ou un rebord. Elle comporte notamment au moins une paroi de faible épaisseur, ce qui la rend relativement fragile. Elle est néanmoins conçue pour résister aux contraintes mécaniques et/ou thermiques particulièrement importantes lors du fonctionnement de la turbomachine. Elle est fabriquée par fabrication additive à partir d'un matériau poudreux 17 qui est typiquement une poudre en matériau métallique pour un usage aéronautique.

La pièce 1 comprend une extrémité inférieure 1a, une extrémité supérieure 1b qui est opposée à l'extrémité inférieure 1a et un corps 11 entre l'extrémité inférieure 1a et l'extrémité supérieure 1b. Elle est par exemple non entièrement symétrique de révolution autour de son axe longitudinal et elle présente une faible épaisseur, ce qui la rend difficile à fabriquer, notamment à maintenir lors de sa fabrication. En particulier, les contraintes mécaniques exercées sur l'ébauche de pièce 1 doivent rester faibles pour ne pas la détériorer.

L'outillage 2 comporte un bac d'alimentation 3 en matériau poudreux 17, un bac de fabrication 4, dans lequel va être formé l'ébauche de pièce 1, et un troisième bac, qui peut être un bac de récupération 5 du surplus de matériau poudreux ou un deuxième bac d'alimentation.

Le fond de chaque bac est formé d'un plateau qui est mobile en translation sur un bras d'actionnement 6 orienté selon un axe vertical des bacs. Chaque plateau comprend une plaque métallique qui forme une embase pour le matériau poudreux 17. Le plateau 7 du bac d'alimentation est configuré pour se déplacer selon un premier axe vertical Z1-Z1 qui est sensiblement parallèle au deuxième axe vertical Z2-Z2 du plateau de fabrication 8.

L'actionnement du plateau 7 du bac d'alimentation permet d'amener du matériau poudreux dans le bac de fabrication 4. Le plateau de fabrication 8 du bac de fabrication, en descendant, permet la création des couches 19 successives de l'ébauche de pièce 1.

L'outillage 2 comporte également un moyen d'étalement 10, du type rouleau tel que celui qui est représenté à la figure 1 ou bien racleur, qui permet de pousser le matériau poudreux 17 du bac d'alimentation 3 dans le bac de fabrication 4 et d'étaler ce matériau poudreux, dans le bac d'alimentation 3, de manière à former une couche 19 de poudre d'épaisseur déterminée. Pour ce faire, le moyen d'étalement 10 se déplace le long d'un plan de balayage horizontal selon une direction de déplacement représentée par la flèche A allant du bac d'alimentation 3 au bac de récupération 5. Le surplus de poudre peut être récupéré dans le bac de récupération 5.

L'outillage 2 comprend en outre un moyen de chauffage 12 configuré pour faire fondre ou pour fritter au moins une partie d'une couche 19 de poudre déposée sur le plateau de fabrication 8, de manière à obtenir, après solidification, une couche 19 de l'ébauche de pièce 1.

Le moyen de chauffage 12 comprend par exemple un laser 14 et un ou plusieurs miroirs 15 permettant d'envoyer le faisceau laser vers les zones de la couche de matériau poudreux 17 à fusionner ou à fritter. Le bac de fabrication 4 va ainsi contenir, après le balayage de la couche de matériau poudreux par un faisceau énergétique, la couche 19 de matière solidifiée qui est entourée du matériau poudreux non fusionné ou non fritté.

En référence à la figure 2, le plateau de fabrication 8 comprend une surface extérieure inférieure S1 et une surface extérieure supérieure S2 qui est opposée à la surface extérieure inférieure S1 et à laquelle sont fixés l'ébauche de pièce 1 et l'ensemble de maintien 20, suite à une étape de fabrication additive 101 de l'ébauche de pièce 1 et de l'ensemble de maintien 20. L'ensemble de maintien 20 est réalisé dans le même matériau que l'ébauche de pièce 1.

L'ensemble de maintien 20 comprend une première partie de maintien 30 et une deuxième partie de maintien 40 qui sont situées chacune latéralement de part et d'autre de l'ébauche de pièce 1, suite à l'étape de fabrication additive 101. L'ensemble de maintien 20 s'étend alors longitudinalement selon un axe longitudinal Z-Z qui est sensiblement parallèle à l'axe longitudinal de l'ébauche de pièce 1.

Dans le présent document et en l'absence de précision contraire, une direction axiale ou longitudinale est une direction parallèle à l'axe longitudinal Z-Z de l'ensemble de maintien 20. Une direction radiale ou transversale X-X ou Y-Y est une direction orthogonale à l'axe longitudinal Z-Z de l'ensemble de maintien et sécante avec cet axe. Une direction circonférentielle est définie comme une direction localement orthogonale à une direction radiale et à la direction de l'axe longitudinal Z-Z de l'ensemble de maintien.

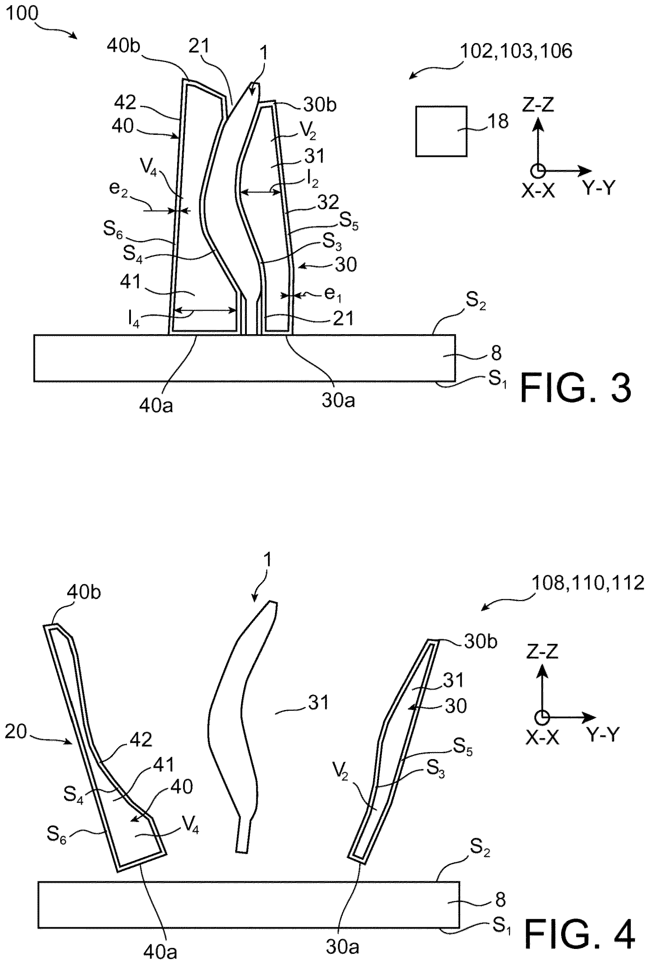

En référence conjointe aux figures 2 et 3, l'ensemble de maintien 20 est configuré pour se déformer en s'allongeant transversalement pour réduire un espace 21 entre l'ébauche de pièce 1 et l'ensemble de maintien 20 par dilation de l'ensemble de maintien 20 relativement à l'ébauche de pièce 1 lors d'un chauffage 102, 103 de l'ébauche de pièce 1 et de l'ensemble de maintien 20 dans un four 18. L'ensemble de maintien 20 est conçu pour maintenir l'ébauche de pièce 1, tout en limitant les contraintes mécaniques exercées sur l'ébauche de pièce 1.

La première partie de maintien 30 et la deuxième partie de maintien 40 peuvent notamment avoir chacune une densité inférieure à la densité de l'ébauche de pièce 1, pour favoriser une dilatation différentielle de l'ensemble de maintien 20 relativement à l'ébauche de pièce 1.

La première partie de maintien 30 est formée d'une première coquille creuse qui s'étend longitudinalement depuis une extrémité inférieure 30a jusqu'à une extrémité supérieure 30b qui est opposée à l'extrémité inférieure 30a. La première partie de maintien 30 est configurée pour se dilater pour épouser la forme d'un premier côté de l'ébauche de pièce 1 lors du chauffage 102, 103 de l'ensemble de maintien 20.

La première partie de maintien 30 comprend une première paroi externe 32 qui la délimite vers l'extérieur et qui délimite une première cavité interne 31 de l'ensemble de maintien 20.

La première cavité interne 31 contient un fluide. Ce fluide est un gaz, typiquement de l'air qui a été emprisonné dans la première cavité interne 31 lors de la fusion ou du frittage du matériau poudreux 17 pour former la première partie de maintien 30. La première cavité interne 31 est fermée hermétiquement au fluide, ce qui permet au fluide de se dilater dans la première cavité interne 31 et de provoquer la déformation de la première partie de maintien 30 lorsqu'il est chauffé.

Lors du chauffage 102, 103 de l'ensemble de maintien 20, la première cavité interne 31 est notamment configurée pour provoquer un allongement d'une largeur l1 à une largeur l2 pouvant aller de 60% à 100% selon une direction radiale Y-Y, X-X de déformation maximale de la première cavité interne 31, par exemple de 80%. Le volume de la première cavité interne 31 augmente entre 40% et 60% d'un volume initial V1 qui est représenté à la figure 2 à un volume V2 qui est représenté à la figure 3.

La première paroi externe 32 est étanche au fluide pour le maintenir emprisonné dans la première cavité interne 31. La première paroi externe 32 présente une épaisseur e1 comprise entre 0,3mm et 1mm, par exemple de 0,6 mm. L'épaisseur e1 de la première paroi externe 32 reste sensiblement constante avant et après le chauffage 102, 103 de l'ensemble de maintien 20.

La deuxième partie de maintien 40 est formée d'une deuxième coquille creuse qui s'étend longitudinalement depuis une extrémité inférieure 40a jusqu'à une extrémité supérieure 40b qui est opposée à l'extrémité inférieure 30a. La deuxième partie de maintien 40 est configurée pour se dilater pour épouser la forme d'un deuxième côté de l'ébauche de pièce 1 lors du chauffage 102, 103 de l'ensemble de maintien 20.

La deuxième partie de maintien 40 comprend une deuxième paroi externe 42 qui la délimite vers l'extérieur et qui délimite une deuxième cavité interne 41 de l'ensemble de maintien 20.

La deuxième cavité interne 41 contient un fluide. Ce fluide est un gaz, typiquement de l'air qui a été emprisonné dans la deuxième cavité interne 41 lors de la fusion ou du frittage du matériau poudreux 17 pour former la deuxième partie de maintien 40. La deuxième cavité interne 41 est fermée hermétiquement au fluide, ce qui permet au fluide de se dilater dans la deuxième cavité interne 41 et de provoquer la déformation de la deuxième partie de maintien 40 lorsqu'il est chauffé.

Lors du chauffage 102, 103 de l'ensemble de maintien 20, la deuxième cavité interne 41 est notamment configurée provoquer un allongement d'une largeur l3 à une largeur l4 pouvant aller de 60% à 100% selon une direction radiale Y-Y, X-X de déformation maximale de la deuxième cavité interne 41, par exemple de 80%. Le volume de la deuxième cavité interne 41 augmente entre 40% et 60% d'un volume initial V3 qui est représenté à la figure 2 à un volume V4 qui est représenté à la figure 3. Le volume initial V3 de la deuxième cavité interne 41 est par exemple sensiblement égal au volume initial V1 de la première cavité interne 31. Le volume après chauffage V4 de la deuxième cavité interne 41 est par exemple sensiblement égal au volume près chauffage V2 de la première cavité interne 31.

La deuxième paroi externe 42 est étanche au fluide pour le maintenir emprisonné dans la deuxième cavité interne 41. La deuxième paroi externe 42 présente une épaisseur e2 comprise entre 0,3mm et 1mm, par exemple de 0,6 mm. L'épaisseur e2 de la deuxième paroi externe 42 reste sensiblement constante avant et après le chauffage 102, 103 de l'ensemble de maintien 20. L'épaisseur e2 de la deuxième paroi externe 42 est par exemple sensiblement égale à l'épaisseur e1 de la deuxième paroi externe 42.

Le procédé de fabrication 100 de la pièce 1 pour turbomachine est décrit plus en détail ci-dessous. Le procédé de fabrication 100 comprend l'étape de fabrication additive 101 de l'ensemble de maintien 20 et de l'ébauche de pièce 1 sur le plateau de fabrication 8 par fusion ou frittage de matériau poudreux 17 au moyen de l'outillage 2.

L'étape de fabrication additive 101 comprend un refroidissement rapide de l'ébauche de pièce 1 et de l'ensemble de maintien 20, suite à la fusion ou au frittage du matériau poudreux 17, ce qui génère des contraintes mécaniques, notamment des retraits, ainsi que des variations de structures dans l'ébauche de pièce 1 et de l'ensemble de maintien 20.

L'étape de fabrication additive 101 peut comprendre un dépoudrage qui consiste à éliminer le matériau poudreux 17 non fusionné ou non fritté qui est situé dans l'espace 21 entre la première partie de maintien 30 et l'ébauche de pièce 1 et entre l'ébauche de pièce 1 et la deuxième partie de maintien 40. Le dépoudrage est facilité par l'espace 21 relativement important entre l'ensemble de maintien 20 et l'ébauche de pièce 1, suite à la fusion ou à au frittage du matériau poudreux 17 et avant chauffage 102, 103 de l'ensemble de maintien 20 et de l'ébauche de pièce 1.

En référence à la figure 2, suite à l'étape de fabrication additive 101, la première partie de maintien 30 est fixée au plateau de fabrication 8 par son extrémité inférieure 30a qui est au contact mécanique de la surface extérieure supérieure S2 du plateau de fabrication 8. La deuxième partie de maintien 40 est fixée au plateau de fabrication 8 par son extrémité inférieure 40a qui est au contact mécanique de la surface extérieure supérieure S2 du plateau de fabrication 8. L'ébauche de pièce 1 est fixée à son extrémité inférieure 1a au plateau de fabrication 8. L'ébauche de pièce 1 est située entre la première partie de maintien 30 et la deuxième partie de maintien 40.

Le procédé de fabrication 100 se poursuit par un chauffage 102, 103 de l'ensemble de maintien 20 et de l'ébauche de pièce 1. Ce chauffage 102 comprend notamment un premier traitement thermique de détentionnement qui vise à réduire les contraintes thermiques, les contraintes mécaniques résiduelles et les variations structurelles qui ont été générées dans l'ébauche de pièce 1, dans la première partie de maintien 30 et dans la deuxième partie de maintien 40 lors de l'étape de fabrication additive 101. Ce chauffage 102, 103 peut aussi comprendre un deuxième traitement thermique 103 pour augmenter la solidité et/ou la durée de vie de l'ébauche de pièce 1. Le chauffage 102, 103 a typiquement lieu à une température supérieure à 1000°C.

Lors du chauffage 102, 103 de l'ensemble de maintien 20, le fluide contenu dans la première cavité interne 31 se dilate, ce qui conduit à déformer la première partie de maintien 30. La première partie de maintien 30 se déforme en s'allongeant transversalement, ce qui lui permet d'épouser la forme d'un côté de l'ébauche de pièce 1.

Lors du chauffage 102, 103 de l'ensemble de maintien 20, le fluide contenu dans la deuxième cavité interne 41 se dilate, ce qui conduit à déformer la deuxième partie de maintien 40. La deuxième partie de maintien 40 se déforme en s'allongeant transversalement, ce qui lui permet d'épouser la forme de l'autre côté de l'ébauche de pièce 1 par rapport à la première partie de maintien 30. Il en résulte un maintien étroit 106 de l'ébauche de pièce 1 entre la première partie de maintien 30 et la deuxième partie de maintien 40.

Lors du chauffage 102, 103 de l'ensemble de maintien 20 et de l'ébauche de pièce 1, l'ensemble de maintien 20 s'est déformé par dilatation de fluide dans chaque cavité interne 31, 41 pour réduire l'espace 21 entre l'ébauche de pièce 1 et l'ensemble de maintien 20. L'espace 21 entre l'ébauche de pièce 1 et l'ensemble de maintien 20 est par exemple de 0,1 mm, ce qui permet à l'ensemble de maintien 20 d'épouser la forme de l'ébauche de pièce 1. La déformation de l'ensemble de maintien 20 par gonflement de chaque cavité interne 31, 41 est notamment irréversible. L'ensemble de maintien 20 maintient alors efficacement l'ébauche de pièce 1, tout en limitant les contraintes mécaniques exercées sur l'ébauche de pièce 1.

Suite au maintien 106 de l'ébauche de pièce 1 et en référence à la figure 4, le procédé de fabrication 100 de la pièce 1 comprend ensuite un usinage 108 de l'ébauche de pièce 1, notamment pour séparer l'extrémité inférieure 1a de l'ébauche de pièce 1 du plateau de fabrication 8. Cet usinage 108 comprend par exemple un usinage par électro érosion. Il peut aussi comprendre un usinage de l'ébauche de la pièce 1, par exemple une rectification de la pièce 1.

Le procédé de fabrication 100 comporte également un usinage 110 de la première partie de maintien 30, notamment pour séparer l'extrémité inférieure 30a de la première partie de maintien 30 du plateau de fabrication 8. Cet usinage 110 comprend par exemple un usinage par électro érosion.

Le procédé de fabrication 100 comporte également un usinage 112 de la deuxième partie de maintien 40, notamment pour séparer l'extrémité inférieure 40a de la deuxième partie de maintien 40 du plateau de fabrication 8. Cet usinage 112 comprend par exemple un usinage par électro érosion. Il peut aussi comprendre un usinage du plateau de fabrication 8, par exemple un sablage en vue de la fabrication d'une autre pièce 1.

Grâce à la déformation de l'ensemble de maintien 20 par dilatation différentielle de fluide dans chaque cavité interne 31, 41 relativement à l'ébauche de pièce 1, l'ébauche de pièce 1 est maintenue davantage et/ou aisément, tout en limitant les contraintes mécaniques exercées sur l'ébauche de pièce 1.

L'invention va à l'encontre du principe général qui est d'éviter de réaliser des cavités internes fermées lors de la fabrication additive d'une ébauche de pièce 1. Ce principe général vise notamment à mieux prévoir et contrôler la forme, la structure et la résistance mécanique de l'ébauche de pièce. Il permet notamment de réduire le risque d'une présence indésirable de matériau poudreux non fusionné dans chaque cavité interne 31, 41.

L'invention n'est pas limitée par cette contrainte, en réalisant chaque cavité interne 31, 41 dans un ensemble de maintien 20 qui est déformable, notamment de manière irréversible, et qui est distinct de la pièce 1 à fabriquer.

L'élimination du matériau poudreux 17 non fusionné ou non fritté est facilitée par l'espace 21 relativement important entre l'ensemble de maintien 20 et l'ébauche de pièce 1, suite à la fusion ou à au frittage du matériau poudreux 17 et avant chauffage 102, 103 de l'ensemble de maintien 20 et de l'ébauche de pièce 1.

Bien entendu, diverses modifications peuvent être apportées par l'homme du métier à l'invention qui vient d'être décrite sans sortir du cadre de l'exposé de l'invention. En particulier, la structure de l'outillage 2, la structure de l'ensemble de maintien 20, et la structure de la pièce 1 peuvent varier par rapport à celles du procédé de fabrication décrit ci-dessus.

La première partie de maintien 30 et la deuxième partie de maintien 40 peuvent être réalisées dans un matériau différent de celui de l'ébauche de pièce 1. La première partie de maintien 30 peut être réalisée dans un matériau différent de celui de la deuxième partie de maintien 40.

Lorsque la première partie de maintien 30 et/ou la deuxième partie de maintien 40 est réalisée dans un matériau avec un coefficient de dilatation thermique significativement plus important que celui du matériau de l'ébauche de pièce 1, la première partie de maintien 30 et/ou la deuxième partie de maintien 40 peut comprendre une densité plus élevée.

Le fluide à l'intérieur de chaque cavité interne 31, 41 peut avoir une composante différente de celle de l'air. Ce fluide peut notamment être un gaz inerte.

En variante, la deuxième partie de maintien 40 comprend une coquille rigide, par exemple une coquille pleine, qui est indéformable lors du chauffage 102, 103 de l'ensemble de maintien 20 et de l'ébauche de pièce 1.

En plus ou en variante, l'ensemble de maintien 20 peut comporter au moins trois parties de maintien 40.

L'ensemble de maintien 20 est de préférence configuré pour s'étendre radialement tout autour de l'ébauche de pièce 1. Néanmoins, l'ensemble de maintien 20 peut s'étendre partiellement autour de l'ébauche de pièce 1.

La déformation de la première partie de maintien 30 par dilatation de gaz dans la première cavité interne 31 et éventuellement la déformation de la deuxième partie de maintien 40 par dilatation de gaz dans la deuxième cavité interne 41 peut avoir lieu durant le deuxième traitement thermique 103 de l'ébauche de pièce 1 et de l'ensemble de maintien 20, en totalité ou bien en continuant la déformation de l'ensemble de maintien 20 qui a été générée lors du premier traitement thermique 102.

Au moins une partie de la première partie de maintien 30 et/ou au moins une partie de la deuxième partie de maintien 40 peut être fabriquée autrement que par fabrication additive.

En variante, l'ébauche de pièce 1 peut être séparée de la première partie de maintien 30 et être séparée de la deuxième partie de maintien 40, avant d'être séparée du plateau de fabrication 8.

## Revendications

1. Procédé de maintien d'une ébauche de pièce (1) pour turbomachine (1) à l'intérieur d'un ensemble de maintien (20) comprenant une première partie de maintien (30), la première partie de maintien (30) comprenant une cavité interne (31) contenant un fluide, l'ébauche de pièce (1) et au moins partiellement la première partie de maintien (30) étant fabriquées par fabrication additive sur lit de poudre en matériau métallique, le procédé de maintien comprenant :
un chauffage (102, 103) de l'ensemble de maintien (20) et de l'ébauche de pièce (1) pour déformer la première partie de maintien (30) par dilatation de fluide dans la cavité interne (31) et pour réduire un espace (21) entre l'ébauche de pièce (1) et l'ensemble de maintien (20) par dilation de la première partie de maintien (30) relativement à l'ébauche de pièce (1) de sorte à maintenir l'ébauche de pièce (1) dans l'ensemble de maintien;
la cavité interne (31) étant fermée hermétiquement au fluide, le fluide étant de préférence un gaz; et
la première partie de maintien (30) comprenant une paroi externe (32) qui délimite la cavité interne (31) et qui présente une épaisseur(el) comprise entre 0,3mm et 1mm, de préférence 0,6 mm, et/ ou la cavité interne (31) est configurée pour s'allonger entre 60% et 100% selon une direction (Y-Y) d'élongation maximale de la cavité interne, de préférence de 80%.

2. Procédé de maintien selon la revendication 1, dans lequel l'ensemble de maintien (20) comprend la première partie de maintien (30) et une deuxième partie de maintien (40) entre lesquelles est située l'ébauche de pièce (1).

3. Procédé de maintien selon la revendication 2, dans lequel la première partie de maintien (30) et la deuxième partie de maintien (40) comprennent chacune une coquille qui comporte une paroi externe (32, 42) et une cavité interne (31, 41) contenant du fluide.

4. Procédé de fabrication d'une pièce pour turbomachine, mettant en oeuvre un procédé de maintien selon l'une quelconques des revendications précédentes 1 à3, comprenant la fabrication (101) de l'ébauche de pièce (1) et au moins partiellement de la première partie de maintien (30) par fabrication additive, notamment par un procédé de fusion sélective ou de frittage sélectif sur lit de poudre en matériau métallique.

5. Procédé de fabrication selon la revendication 4, mettant en oeuvre un procédé de maintien selon la revendication 3, dans lequel l'ébauche de pièce (1), la première partie de maintien (30) et la deuxième partie de maintien (40) sont fabriquées par fabrication additive, de préférence dans un même matériau métallique,
la première partie de maintien (30) et la deuxième partie de maintien (40) ayant notamment chacune une densité inférieure à la densité de l'ébauche de pièce (1).

6. Procédé de fabrication selon la revendication 5, dans lequel le chauffage (102, 103) de l'ensemble de maintien (20) et de l'ébauche de pièce (1) a lieu lors d'un traitement thermique (102) de détentionnement de l'ébauche de pièce (1) pour limiter les contraintes thermiques et/ou mécaniques de l'ébauche de pièce (1).

7. Procédé de fabrication selon l'une quelconque des revendications précédentes 4 à 6, comprenant une séparation de l'ébauche de pièce (1) de l'ensemble de maintien (20), et de préférence une séparation de l'ébauche de pièce (1) d'une embase pour l'ébauche de pièce (1) et pour l'ensemble de maintien (20), après le chauffage (102, 103) de l'ensemble de maintien (20) et de l'ébauche de pièce (1).

## Patentansprüche

1. Verfahren zum Halten eines Werkstückrohlings (1) für eine Turbomaschine (1) im Inneren einer Halteanordnung (20), die einen ersten Halteabschnitt (30) umfasst, wobei der erste Halteabschnitt (30) einen inneren Hohlraum (31) umfasst, der ein Fluid enthält, wobei der Werkstückrohling (1) und mindestens teilweise der erste Halteabschnitt (30) durch additive Fertigung auf einem Pulverbett aus metallischem Material hergestellt werden, wobei das Halteverfahren Folgendes umfasst:
Erhitzen (102, 103) der Halteanordnung (20) und des Werkstückrohlings (1), um den ersten Halteabschnitt (30) durch Fluidausdehnung im inneren Hohlraum (31) zu verformen und einen Spalt (21) zwischen dem Werkstückrohling (1) und der Halteanordnung (20) durch Ausdehnung des ersten Halteabschnitts (30) im Verhältnis zum Werkstückrohling (1) zu reduzieren, um den Werkstückrohling (1) in der Halteanordnung zu halten;
wobei der innere Hohlraum (31) gegenüber dem Fluid hermetisch abgedichtet ist, wobei das Fluid ein Gas ist; und
wobei der erste Halteabschnitt (30) eine Außenwand (32) umfasst, die den inneren Hohlraum (31) begrenzt und eine Dicke (e1) zwischen 0,3 mm und 1 mm, vorzugsweise von 0,6 mm, aufweist, und/oder der innere Hohlraum (31) dazu konfiguriert ist, sich zwischen 60 % und 100 % entlang einer maximalen Dehnungsrichtung (Y-Y) des inneren Hohlraums, vorzugsweise um 80 %, zu verlängern.

2. Halteverfahren nach Anspruch 1, wobei die Halteanordnung (20) den ersten Halteabschnitt (30) und einen zweiten Halteabschnitt (40) umfasst, zwischen denen sich der Werkstückrohling (1) befindet.

3. Halteverfahren nach Anspruch 2, wobei der erste Halteabschnitt (30) und der zweite Halteabschnitt (40) jeweils eine Hülle umfassen, die eine Außenwand (32, 42) und einen inneren Hohlraum (31, 41), der Flüssigkeit enthält, umfasst.

4. Verfahren zum Herstellen eines Werkstücks für eine Turbomaschine, das ein Halteverfahren nach einem der Ansprüche 1 bis 3 implementiert, das das Herstellen (101) des Werkstückrohlings (1) und mindestens teilweise des ersten Halteabschnitts (30) durch additive Fertigung, insbesondere durch ein selektives Schmelz- oder ein selektives Sinterverfahren auf einem Pulverbett aus metallischem Material, umfasst.

5. Herstellungsverfahren nach Anspruch 4, das ein Halteverfahren nach Anspruch 3 implementiert, wobei der Werkstückrohling (1), der erste Halteabschnitt (30) und der zweite Halteabschnitt (40) durch additive Fertigung, vorzugsweise aus dem gleichen metallischen Material, hergestellt werden,
wobei der erste Halteabschnitt (30) und der zweite Halteabschnitt (40) jeweils insbesondere eine Dichte aufweisen, die geringer ist als die Dichte des Werkstückrohlings (1).

6. Herstellungsverfahren nach Anspruch 5, wobei das Erhitzen (102, 103) der Halteanordnung (20) und des Werkstückrohlings (1) während einer spannungsabbauenden Wärmebehandlung (102) des Werkstückrohlings (1) erfolgt, um die thermische und/oder mechanische Belastung des Werkstückrohlings (1) zu begrenzen.

7. Herstellungsverfahren nach einem der Ansprüche 4 bis 6, das ein Trennen des Werkstückrohlings (1) von der Halteanordnung (20) und vorzugsweise ein Trennen des Werkstückrohlings (1) von einer Basis für den Werkstückrohling (1) und für die Halteanordnung (20) nach dem Erhitzen (102, 103) der Halteanordnung (20) und des Werkstückrohlings (1) umfasst.

## Claims

1. A method for holding a part blank (1) for a turbomachine (1) inside a holding assembly (20) comprising a first holding portion (30), the first holding portion (30) comprising an internal cavity (31) containing a fluid, the part blank (1) and at least partially the first holding portion (30) being manufactured by additive manufacturing on a powder bed of metal material, the holding method comprising:
heating (102, 103) the holding assembly (20) and the part blank (1) to deform the first holding portion (30) by fluid expansion in the internal cavity (31) and to reduce a space (21) between the part blank (1) and the holding assembly (20) by expansion of the first holding portion (30) relative to the part blank (1) so as to hold the part blank (1) in the holding assembly;
the internal cavity (31) being hermetically sealed to the fluid, the fluid preferably being a gas; and
the first holding portion (30) comprising an outer wall (32) which delimits the internal cavity (31) and which has a thickness (e1) comprised between 0.3 mm and 1mm, preferably 0.6 mm, and/or the internal cavity (31) is configured to elongate between 60% and 100% in a direction (Y-Y) of maximum elongation of the internal cavity, preferably 80%.

2. The holding method according to claim 1, wherein the holding assembly (20) comprises the first holding portion (30) and a second holding portion (40) between which the part blank (1) is located.

3. The holding method according to claim 2, wherein the first holding portion (30) and the second holding portion (40) each comprise a shell which includes an outer wall (32, 42) and an internal cavity (31, 41) containing fluid.

4. A method for manufacturing a part for a turbomachine, implementing a holding method according to any one of the preceding claims 1 to 3, comprising the manufacture (101) of the part blank (1) and at least partially of the first holding portion (30) by additive manufacturing, in particular by a method of selective melting or selective sintering on a powder bed of metal material.

5. The manufacturing method according to claim 4, implementing a holding method according to claim 3, wherein the part blank (1), the first holding portion (30) and the second holding portion (40) are manufactured by additive manufacturing, preferably in the same metal material,
the first holding portion (30) and the second holding portion (40) each having in particular a density lower than the density of the part blank (1).

6. The manufacturing method according to claim 5, wherein the heating (102, 103) of the holding assembly (20) and the part blank (1) takes place during a heat treatment (102) for stress relieving the part blank (1) to limit the thermal and/or mechanical stresses of the part blank (1).

7. The manufacturing method according to any one of the preceding claims 4 to 6, comprising a separation of the part blank (1) from the holding assembly (20), and preferably a separation of the part blank (1) from a base for the part blank (1) and for the holding assembly (20), after heating (102, 103) the holding assembly (20) and the part blank (1).
